# EUROPEAN PATENT APPLICATION

(11) **EP 3 179 076 A1**
(43) Date of publication of application: **14.06.2017**
(21) Application number: 16200868.4
(22) Date of filing: 28.11.2016
(51) Int. Cl.: F02C 7/18, B64D 41/00, F02C 9/18

(54) **METHOD AND SYSTEM FOR PRE-COOLER EXHAUST ENERGY RECOVERY**

(30) Priority: 07.12.2015 US 201514961057
(71) Applicant: General Electric Company, Schenectady, NY 12345 (US)
(72) Inventor: SENNOUN, Mohammed El Hacin, West Chester, OH 45069 (US)
(74) Representative: Williams, Andrew Richard

(57) **Abstract**

A system for generating an auxiliary source of electrical power in an energy recovery system 200 is provided. The energy recovery system 200 includes a compressor air supply precooler 202 including a first flowpath 204 configured to channel compressor bleed air 206 between a precooler inlet 208 and a precooler outlet 210. The precooler 202 further includes a second flow path 212 configured to channel a coolant 214 between a precooler coolant inlet 216 and a precooler coolant outlet 218. The precooler 202 is configured to cool compressor bleed air 206 from a bleed air source 236, 238. The system also includes a thermoelectric generator 222 coupled in flow communication with the precooler coolant outlet 218.

## Description

The field of the disclosure relates generally to gas turbine engines and, more particularly, to a method and system for generating electricity from a pre-cooler exhaust in gas turbine engines.

At least some known aircraft environmental control systems are supplied with engine bleed air. Environmental control systems, commonly referred to as ECS systems, incorporate various pieces of equipment such as regulating valves, heat exchangers, and other devices in a system configured to pre-condition engine bleed air.

The compressor bleed air is cooled by fan air in a heat exchanger and is then delivered to the environmental control system for controlling cabin air freshness, pressure, and temperature. Extraction of aircraft bleed air from the engine compressor has adverse effects on the propulsion cycle and engine life. Engine turbine power is needed to compress air and account for compressor inefficiency. Therefore, extra fuel consumption is associated with gas turbine engine compressor bleed air (air which does not produce thrust). This extra fuel burned in the engine combustor results in higher gas temperature delivered to the engine turbine and reduction of turbine blade life. Such penalties are incurred by the engine turbine to provide extra power associated with bleed air.

Because of the discrete nature of compressor bleed taps, bleed air is not able to be provided at exactly the correct pressure needed for the aircraft anti-ice and ECS systems. Typically only two bleed ports are provided. Therefore, bleed air which exceeds minimum pressure requirements is supplied, resulting in even higher penalty to the engine cycle than would be required by the aircraft systems. The bleed air is not only at a higher than required pressure, it is also too hot for use with the aircraft anti-ice and ECS systems directly. For reasons of fire safety, maximum bleed air temperature is usually limited to 350° to 500° F. Temperature control requires cooling the bleed air with a precooler. Most modem engines use fan air to cool compressor bleed air. Use of fan air imposes an additional penalty on fuel consumption. Further, the precooler is usually large and may require a fan air scoop which produces drag. In some cases, a typical large turbofan engine may consume about 2% extra fuel and run at about 20° F hotter turbine temperature to provide the aircraft system bleed air.

In one aspect according to the present invention, a bleed air supply system includes a compressor air supply precooler including a first flowpath configured to channel compressor bleed air between a precooler inlet and a precooler outlet. The precooler further includes a second flow path configured to channel a coolant between a precooler coolant inlet and a precooler coolant outlet. The precooler is configured to cool compressor bleed air from a bleed air source. The system also includes a thermoelectric generator coupled in flow communication with the precooler coolant outlet.

In another aspect, a method of generating an auxiliary source of electrical power includes channeling a portion of an aircraft engine fan air flow to a heat exchanger, cooling a flow of bleed air using the portion of aircraft engine fan air flow in the heat exchanger, and generating electrical energy in a thermoelectric generator coupled in flow communication with the heat exchanger.

In yet another aspect, a turbofan engine includes a core engine including a multistage compressor, a fan powered by a power turbine driven by gas generated in the core engine, and a fan bypass duct at least partially surrounding the core engine and the fan. The turbofan engine also includes a gas turbine engine energy recovery system including a compressor air supply precooler including a first flowpath configured to channel compressor bleed air between a precooler inlet and a precooler outlet. The precooler further includes a second flow path configured to channel a coolant between a precooler coolant inlet and a precooler coolant outlet. The precooler is configured to cool compressor bleed air from a bleed air source. The turbofan engine also includes a thermoelectric generator coupled in flow communication with the precooler coolant outlet.

Various features, aspects, and advantages of the present disclosure will become better understood when the following detailed description is read with reference to the accompanying drawings in which like characters represent like parts throughout the drawings, wherein:
FIG. 1 is a schematic cross-sectional view of a gas turbine engine in accordance with an exemplary embodiment of the present disclosure.
FIG. 2 is a perspective view of an aircraft.
FIG. 3 is a schematic block diagram of an aircraft energy recovery system.
FIG. 4 is a perspective view of the thermoelectric module that may be used with the thermoelectric generator shown in FIG. 2.
FIG. 5 is a perspective view of a plurality of thermoelectric modules that may be used in TEG shown in FIG. 3.

Unless otherwise indicated, the drawings provided herein are meant to illustrate features of embodiments of this disclosure. These features are believed to be applicable in a wide variety of systems comprising one or more embodiments of this disclosure. As such, the drawings are not meant to include all conventional features known by those of ordinary skill in the art to be required for the practice of the embodiments disclosed herein.

In the following specification and the claims, reference will be made to a number of terms, which shall be defined to have the following meanings.

The singular forms "a," "an," and "the" include plural references unless the context clearly dictates otherwise.

"Optional" or "optionally" means that the subsequently described event or circumstance may or may not occur, and that the description includes instances where the event occurs and instances where it does not.

Approximating language, as used herein throughout the specification and claims, may be applied to modify any quantitative representation that could permissibly vary without resulting in a change in the basic function to which it is related. Accordingly, a value modified by a term or terms, such as "about," "approximately," and "substantially," are not to be limited to the precise value specified. In at least some instances, the approximating language may correspond to the precision of an instrument for measuring the value. Here and throughout the specification and claims, range limitations may be combined and/or interchanged; such ranges are identified and include all the sub-ranges contained therein unless context or language indicates otherwise.

Embodiments of the energy recovery system described herein provide a cost-effective method for generating electrical energy from waste heat transferred from compressor bleed air to fan air. The heated fan air is typically discharged to an undercowl location or overboard from the gas turbine engine. By first passing the heated fan air through a thermoelectric generator before discharging the heated fan air overboard, a portion of the heat contained in the heated fan air can be converted to electrical energy to supplement the engine electrical generator or to supply other loads. This electrical energy is captured in a circuit forming a thermoelectric module that contains thermoelectric materials that generate electricity from heat directly. In one embodiment, the thermoelectric module includes two dissimilar thermoelectric materials joined at their ends, an n-type (negatively charged); and a p-type (positively charged) semiconductors. A direct electric current flows in the circuit when there is a temperature difference between the two materials. Generally, the current magnitude has a proportional relationship with the temperature difference (i.e., the more the temperature difference, the higher the current.).

In operation, thermoelectric modules are employed in harsh mechanical and thermal conditions. Because they operate in a high temperature gradient, the modules are subject to large thermally induced stresses and strains for long periods of time. They also are subject to mechanical fatigue caused by a large number of thermal cycles. The materials are selected to survive these tough mechanical and thermal conditions. Also, the thermoelectric module is designed such that the two thermoelectric materials are thermally in parallel, but electrically in series. Accordingly, the efficiency of thermoelectric modules is greatly affected by its geometrical design.

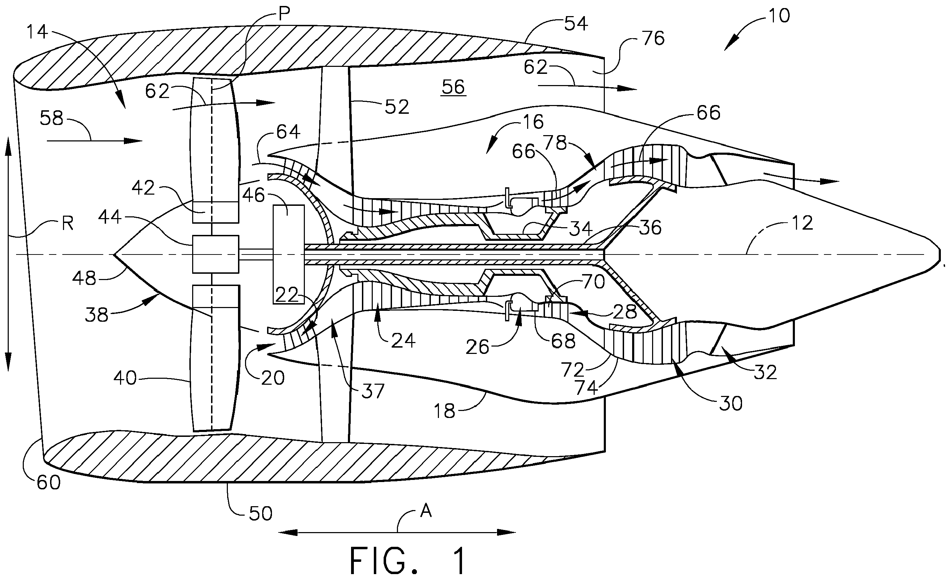

FIG. 1 is a schematic cross-sectional view of a gas turbine engine 10 in accordance with an exemplary embodiment of the present disclosure. In the example embodiment, gas turbine engine 10 is embodied in a high-bypass turbofan jet engine. As shown in FIG. 1, turbofan engine 10 defines an axial direction A (extending parallel to a longitudinal axis 12 provided for reference) and a radial direction R. In general, turbofan 10 includes a fan section 14 and a core turbine engine 16 disposed downstream from fan section 14.

In the example embodiment, core turbine engine 16 includes an approximately tubular outer casing 18 that defines an annular inlet 20. Outer casing 18 encases, in serial flow relationship, a compressor section including a booster or low pressure compressor (LPC) 22 and a high pressure compressor (HPC) 24; a combustion section 26; a turbine section including a high pressure turbine (HPT) 28 and a low pressure turbine (LPT) 30; and a jet exhaust nozzle section 32. A high pressure (HP) shaft or spool 34 drivingly connects HPT 28 to HPC 24. A low pressure (LP) shaft or spool 36 drivingly connects LPT 30 to LPC 22. The compressor section, combustion section 26, turbine section, and nozzle section 32 together define a core air flowpath 37. In various embodiments, HPC 24 is a source of bleed air.

In the example embodiment, fan section 14 includes a variable pitch fan 38 having a plurality of fan blades 40 coupled to a disk 42 in a spaced apart relationship. Fan blades 40 extend radially outwardly from disk 42. Each fan blade 40 is rotatable relative to disk 42 about a pitch axis P by virtue of fan blades 40 being operatively coupled to a suitable pitch change mechanism (PCM) 44 configured to vary the pitch of fan blades 40. In other embodiments, pitch change mechanism (PCM) 44 configured to collectively vary the pitch of fan blades 40 in unison. Fan blades 40, disk 42, and pitch change mechanism 44 are together rotatable about longitudinal axis 12 by LP shaft 36 across a power gear box 46. Power gear box 46 includes a plurality of gears for adjusting the rotational speed of fan 38 relative to the LP shaft 36 to a more efficient rotational fan speed.

Disk 42 is covered by rotatable front hub 48 aerodynamically contoured to promote an airflow through the plurality of fan blades 40. Additionally, fan section 14 includes an annular fan casing or outer nacelle 50 that circumferentially surrounds fan 38 and/or at least a portion of core turbine engine 16. In the example embodiment, nacelle 50 is configured to be supported relative to core turbine engine 16 by a plurality of circumferentially-spaced outlet guide vanes 52. Moreover, a downstream section 54 of nacelle 50 may extend over an outer portion of core turbine engine 16 so as to define a bypass airflow passage 56 therebetween.

During operation of turbofan engine 10, a volume of fan air 58 enters turbofan engine 10 through an associated inlet 60 of nacelle 50 and/or fan section 14. As volume of fan air 58 passes across fan blades 40, a first portion 62 of volume of fan air 58 is directed or routed into bypass airflow passage 56 and a second portion 64 of volume of fan air 58 is directed or routed into core air flowpath 37, or more specifically into LP compressor 22. A ratio between first portion 62 and second portion 64 is commonly referred to as a bypass ratio. The pressure of second portion 64 is then increased as it is routed through HPC 24 and into combustion section 26, where it is mixed with fuel and burned to provide combustion gases 66.

Combustion gases 66 are routed through HP turbine 28 where a portion of thermal and/or kinetic energy from combustion gases 66 is extracted via sequential stages of HP turbine stator vanes 68 that are coupled to outer casing 18 and HP turbine rotor blades 70 that are coupled to HP shaft or spool 34, thus causing HP shaft or spool 34 to rotate, which then drives a rotation of HPC 24. Combustion gases 66 are then routed through LP turbine 30 where a second portion of thermal and kinetic energy is extracted from combustion gases 66 via sequential stages of LP turbine stator vanes 72 that are coupled to outer casing 18 and LP turbine rotor blades 74 that are coupled to LP shaft or spool 36, which drives a rotation of LP shaft or spool 36 and LP compressor 22 and/or rotation of fan 38.

Combustion gases 66 are subsequently routed through jet exhaust nozzle section 32 of core turbine engine 16 to provide propulsive thrust. Simultaneously, the pressure of first portion 62 is substantially increased as first portion 62 is routed through bypass airflow passage 56 before it is exhausted from a fan nozzle exhaust section 76 of turbofan 10, also providing propulsive thrust. HP turbine 28, LP turbine 30, and jet exhaust nozzle section 32 at least partially define a hot gas path 78 for routing the combustion gases 66 through core turbine engine 16.

Turbofan engine 10 is depicted in FIG. 1 by way of example only, and that in other exemplary embodiments, turbofan engine 10 may have any other suitable configuration including for example, a turboprop engine.

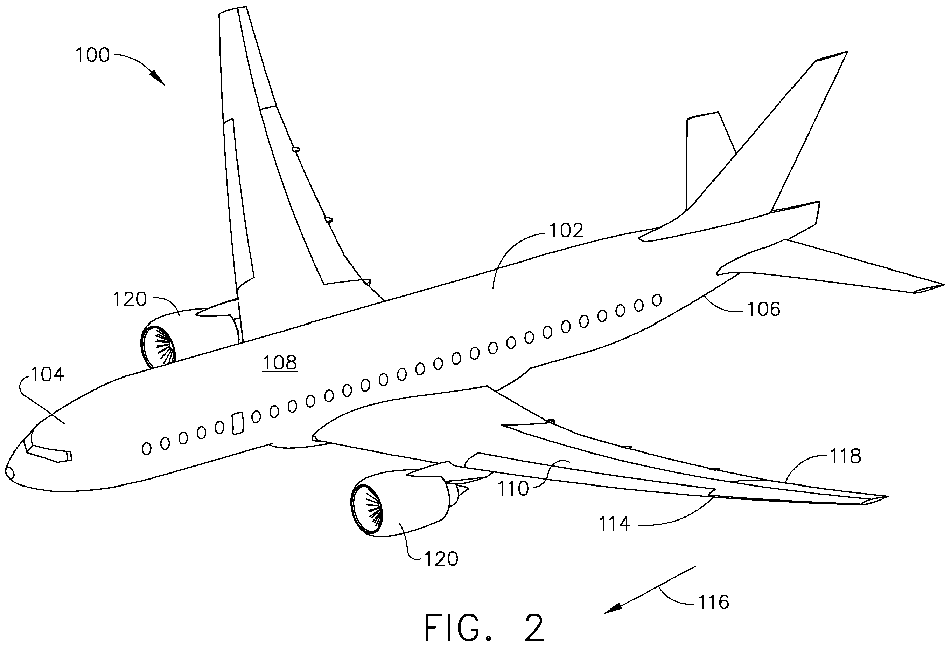

FIG. 2 is a perspective view of an aircraft 100. In the example embodiment, aircraft 100 includes a fuselage 102 that includes a nose 104, a tail 106, and a hollow, elongate body 108 extending therebetween. Aircraft 100 also includes a wing 110 extending away from fuselage 102 in a lateral direction 112. Wing 110 includes a forward leading edge 114 in a direction 116 of motion of aircraft 100 during normal flight and an aft trailing edge 118 on an opposing edge of wing 110. Aircraft 100 further includes at least one engine 120 configured to generate thrust. Engine 120 is coupled to at least one of wing 110 and fuselage 102, for example, in a pusher configuration proximate tail 106.

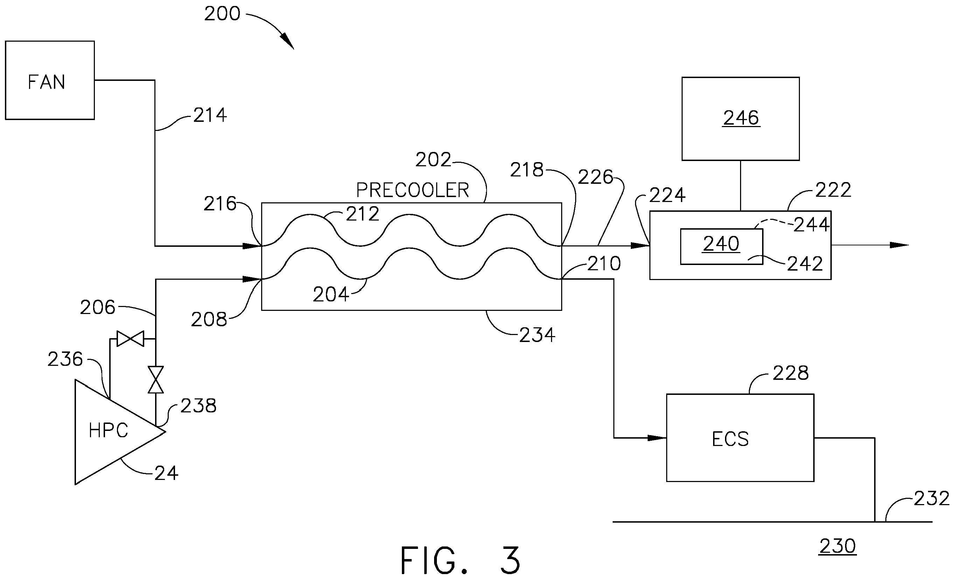

FIG. 3 is a schematic block diagram of an aircraft energy recovery system 200. In the exemplary embodiment, aircraft energy recovery system 200 includes a compressor air supply precooler 202 including a first flowpath 204 configured to channel compressor bleed air 206 between a precooler inlet 208 and a precooler outlet 210. Precooler 202 further includes a second flow path 212 configured to channel a coolant 214 between a precooler coolant inlet 216 and a precooler coolant outlet 218. Precooler 202 is configured to cool compressor bleed air from a bleed air source, such as, but, not limited to, HPC 24. Aircraft energy recovery system 200 also includes a thermoelectric generator (TEG) 222 coupled in flow communication with precooler coolant outlet 218. TEG 222 includes an inlet 224 configured to receive a flow of heated air 226 from precooler coolant outlet 218. Precooler outlet 210 is coupled in flow communication with an environmental control system (ECS) 228, which treats cooled air from precooler 202 and channels the treated air to a cabin 230 within an aircraft fuselage 232. Precooler 202 includes an air-to-air heat exchanger 234 in fluid communication with a source of cooling air 214. In one embodiment, source of cooling air 214 includes a portion of fan air. In the exemplary embodiment, compressor 24 includes a low pressure bleed air port 236 positioned between a first and a last stage of the compressor and a high pressure bleed air port 238 positioned between low pressure bleed air port 236 and a last stage of the compressor. The bleed air source is selectable between low pressure bleed air port 236 and high pressure bleed air port 238.

TEG 222 includes a thermoelectric module 240 including a first surface 242 and an opposing second surface 244. TEG 222 is configured to generate an electrical current flow according to a Seebeck effect when a thermal gradient is maintained between first surface 242 and second surface 244. The generated electrical energy is directed to an electrical system 246 of engine 10 or aircraft fuselage 232.

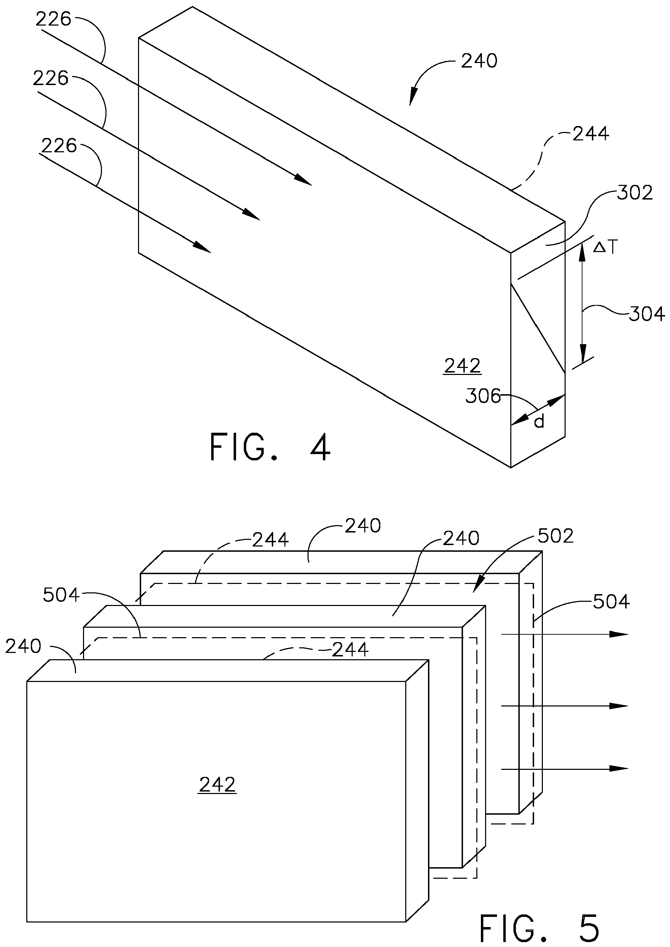

FIG. 4 is a perspective view of thermoelectric module 240 that may be used with TEG 222 (shown in FIG. 2). Thermoelectric module 240 includes a first surface 242 and an opposing second surface 244. Thermoelectric module 240 is configured to generate a current flow of electricity according to a Seebeck effect when a thermal gradient is maintained between first surface 242 and second surface 244. A graph 302 illustrates a temperature difference (AT) 304 across a distance (d) 306 between first surface 242 and second surface 244. Thermoelectric module 240 is formed of thermoelectric materials, which have a capability to generate electrical power directly from heat by converting temperature differences into electric voltage. These materials typically have a high electrical conductivity and a low thermal conductivity. Having low thermal conductivity ensures that when one side is made hot, the other side stays cold, which helps to generate a large voltage while in a temperature gradient. The measure of the magnitude of electron flow in response to a temperature difference across that material is given by the Seebeck coefficient. In various embodiments thermoelectric module 240 is formed of bismuth telluride (Bi₂Te₃), lead telluride (PbTe), and silicon germanium (SiGe). Because these materials include rare elements, they are expensive compounds to acquire and produce. In other embodiments, the thermal conductivity of semiconductors can be lowered without affecting their high electrical properties using nanotechnology by creating, for example, nanoscale features such as particles, wires, or interfaces in bulk semiconductor materials.

Thermoelectric module 240 includes is a circuit containing thermoelectric materials that generate electricity from heat directly. In one embodiment, thermoelectric module 240 includes two dissimilar thermoelectric materials joined at their ends, an n-type (negatively charged); and a p-type (positively charged) semiconductors. A direct electric current flows in the circuit when there is a temperature difference between the two materials. Generally, the current magnitude has a proportional relationship with the temperature difference (i.e., the more the temperature difference, the higher the current).

FIG. 5 is a perspective view of a plurality of thermoelectric modules 240 that may be used in TEG 222 (shown in FIG. 3). In the example embodiment, plurality of thermoelectric modules 240 may be positioned adjacently with respect to each other, as in a stack of thermoelectric modules 240, and spaced to provide a flow passage 502 between adjacent thermoelectric modules of plurality of thermoelectric modules 240. In other embodiments, a divider plate 504 is positioned between adjacent thermoelectric modules 240 to provide parallel flow paths on each side of adjacent thermoelectric modules 240. Parallel flow paths permit channeling relatively hotter air across one surface 242 of thermoelectric module 240 and relatively cooler air across opposite surface 244 of thermoelectric module 240.

The above-described bleed system provides an efficient method for providing preconditioned air to an aircraft environmental control system. Specifically, the above-described gas turbine engine energy recovery system includes a thermoelectric generator coupled to a heat exchanger outlet for generating electrical energy from waste heat discharged from the heat exchanger.

The above-described embodiments of a method and system of a gas turbine engine energy recovery system provides a cost-effective and reliable means for providing a auxiliary electrical power from otherwise heat in the bleed air supply system in an aircraft. In addition, the above-described methods and systems facilitate reducing a load on an aircraft engine electrical generator. As a result, the methods and systems described herein facilitate recovering waste heat in a cost-effective and reliable manner.

Although specific features of various embodiments of the disclosure may be shown in some drawings and not in others, this is for convenience only. In accordance with the principles of the disclosure, any feature of a drawing may be referenced and/or claimed in combination with any feature of any other drawing.

This written description uses examples to disclose the embodiments, including the preferred mode, and also to enable any person skilled in the art to practice the embodiments, including making and using any devices or systems and performing any incorporated methods. The patentable scope of the disclosure is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

Various aspects and embodiments of the present invention are defined by the following numbered clauses:
1. A gas turbine engine energy recovery system comprising:
   a compressor air supply precooler comprising a first flowpath configured to channel compressor bleed air between a precooler inlet and a precooler outlet, said precooler further comprising a second flow path configured to channel a coolant between a precooler coolant inlet and a precooler coolant outlet, said precooler configured to cool compressor bleed air from a bleed air source; and
   a thermoelectric generator coupled in flow communication with said precooler coolant outlet.
2. The system of clause 1, wherein said thermoelectric generator comprises an inlet configured to receive a flow of heated air from said precooler coolant outlet.
3. The system of any preceding clause, wherein said precooler outlet is coupled in flow communication with an environmental control system (ECS).
4. The system of any preceding clause, wherein said precooler comprises an air-to-air heat exchanger in fluid communication with a source of cooling air.
5. The system of any preceding clause, wherein said source of cooling air comprises a portion of fan air.
6. The system of any preceding clause, wherein said bleed air source comprises a low pressure bleed air port positioned between a first and a last stage of said compressor and a high pressure bleed air port positioned between said low pressure bleed air port and said last stage of the compressor.
7. The system of any preceding clause, wherein said bleed air source is selectable between the low pressure bleed air port and a high pressure bleed air port.
8. The system of any preceding clause, wherein said thermoelectric generator comprises a thermoelectric module comprising a first surface and an opposing second surface, said thermoelectric module configured to generate a current flow of electricity according to a Seebeck effect when a thermal gradient is maintained across first surface and said second surface.
9. The system of any preceding clause, wherein said thermoelectric generator comprises a thermoelectric module comprising a first surface coupled in flow communication with said precooler coolant outlet and an opposing second surface coupled in flow communication with a flow of relatively cool cooling fluid.
10. The system of any preceding clause, wherein said thermoelectric generator comprises a plurality of thermoelectric modules positioned adjacently with respect to each other in a stack of thermoelectric modules, said thermoelectric modules spaced to provide a flow passage between adjacent thermoelectric modules of said plurality of thermoelectric modules.
11. The system of any preceding clause, wherein said thermoelectric generator comprises at least one of bismuth telluride (Bi₂Te₃), lead telluride (PbTe), and silicon germanium (SiGe).
12. The system of any preceding clause, wherein said thermoelectric generator comprises nanoscale features comprising at least one of nanoparticles, nanowires, and nanointerfaces formed in bulk semiconductor materials.
13. A method of generating an auxiliary source of electrical power, said method comprising:
   channeling a portion of an aircraft engine fan air flow to a heat exchanger;
   cooling a flow of bleed air using the portion of aircraft engine fan air flow in the heat exchanger; and
   generating electrical energy in a thermoelectric generator coupled in flow communication with the heat exchanger.
14. The method of any preceding clause, wherein generating electrical energy in a thermoelectric generator comprises generating electrical energy in a thermoelectric generator comprising at least one of bismuth telluride (Bi₂Te₃), lead telluride (PbTe), and silicon germanium (SiGe).
15. The method of any preceding clause, wherein generating electrical energy in a thermoelectric generator comprises generating electrical energy in a thermoelectric generator comprising at least one of nanoparticles, nanowires, and nanointerfaces formed in bulk semiconductor materials.
16. The method of any preceding clause, wherein generating electrical energy in a thermoelectric generator comprises generating electrical energy in a thermoelectric generator comprising Ag₁₋ₓPbₘSbTe₂₊ₘ.
17. A turbofan engine comprising:
   a core engine including a multistage compressor;
   a fan powered by a power turbine driven by gas generated in said core engine;
   a fan bypass duct at least partially surrounding said core engine and said fan; and
   a gas turbine engine energy recovery system comprising:
      a compressor air supply precooler comprising a first flowpath configured to channel compressor bleed air between a precooler inlet and a precooler outlet, said precooler further comprising a second flow path configured to channel a coolant between a precooler coolant inlet and a precooler coolant outlet, said precooler configured to cool compressor bleed air from a bleed air source; and
         a thermoelectric generator coupled in flow communication with said precooler coolant outlet.
18. The engine of any preceding clause, wherein said thermoelectric generator comprises an inlet configured to receive a flow of heated air from said precooler coolant outlet.
19. The engine of any preceding clause, wherein said thermoelectric generator comprises a thermoelectric module comprising a first surface and an opposing second surface, said thermoelectric module configured to generate a current flow of electricity according to a Seebeck effect when a thermal gradient is maintained across first surface and said second surface.
20. The engine of any preceding clause, wherein said thermoelectric generator comprises at least one of bismuth telluride (Bi₂Te₃), lead telluride (PbTe), and silicon germanium (SiGe).
21. The engine of any preceding clause, wherein said thermoelectric generator comprises nanoscale features comprising at least one of nanoparticles, nanowires, and nanointerfaces formed in bulk semiconductor materials.

## Claims

1. A gas turbine engine energy recovery system (200) comprising:
a compressor air supply precooler (202) comprising a first flowpath (204) configured to channel compressor bleed air (206) between a precooler inlet (208) and a precooler outlet (210), said precooler (202) further comprising a second flow path (212) configured to channel a coolant (214) between a precooler coolant inlet (216) and a precooler coolant outlet (218), said precooler (202) configured to cool compressor bleed air (206) from a bleed air source (236, 238); and
a thermoelectric generator (222) coupled in flow communication with said precooler coolant outlet (218).

2. The system (200) of Claim 1, wherein said thermoelectric generator (222) comprises an inlet (224) configured to receive a flow of heated air (226) from said precooler coolant outlet (218).

3. The system (200) of any preceding Claim, wherein said precooler outlet (210) is coupled in flow communication with an environmental control system (ECS) (228).

4. The system (200) of any preceding Claim, wherein said precooler (202) comprises an air-to-air heat exchanger in fluid communication with a source of cooling air (214).

5. The system (200) of Claim 4, wherein said source of cooling air (214) comprises a portion of fan air.

6. The system of any preceding Claim, wherein said bleed air source (236, 238) comprises at least one of a low pressure bleed air port (236) positioned between a first and a last stage of a compressor (24) and a high pressure bleed air port (238) positioned between said low pressure bleed air port (236) and said last stage of said compressor (24).

7. The system (200) of any preceding Claim, wherein said bleed air source is selectable between the low pressure bleed air port and a high pressure bleed air port.

8. The system (200) of any preceding Claim, wherein said thermoelectric generator (222) comprises a thermoelectric module (240) comprising a first surface (242) and an opposing second surface (244), said thermoelectric module (240) configured to generate a current flow of electricity according to a Seebeck effect when a thermal gradient (304) is maintained across said first surface (242) and said second surface (242).

9. The system (200) of any preceding Claim, wherein said thermoelectric generator (222) comprises a thermoelectric module (240) comprising a first surface (242) coupled in flow communication with said precooler coolant outlet (218) and an opposing second surface (244) coupled in flow communication with a flow of relatively cool cooling fluid.

10. The system (200) of any preceding Claim, wherein said thermoelectric generator (222) comprises a plurality of thermoelectric modules (240) positioned adjacently with respect to each other in a stack of thermoelectric modules (240), said thermoelectric modules spaced to provide a flow passage between adjacent thermoelectric modules (240) of said plurality of thermoelectric modules (240).
